Europäisches Patentamt

European Patent Office

Office européen des brevets

(11) Publication number: **0 452 589 A1**

# EUROPEAN PATENT APPLICATION

(21) Application number: 90312017.8

(51) Int. Cl.5: **D07B 1/02, A01G 23/04**

(22) Date of filing: 02.11.90

(30) Priority: 16.03.90 JP 27404/90 U

(43) Date of publication of application:
23.10.91 Bulletin 91/43

(84) Designated Contracting States:
AT BE CH DE DK ES FR GB GR IT LI LU NL SE

(71) Applicant: Sakanaka, Toshio
112, Mogami, Oaza, Momoyama-cho
Naga-gun, Wakayama-ken(JP)

(72) Inventor: Sakanaka, Toshio
112, Mogami, Oaza, Momoyama-cho
Naga-gun, Wakayama-ken(JP)

(74) Representative: Hillier, Peter et al
Reginald W. Barker & Co., 13, Charterhouse
Square
London, EC1M 6BA(GB)

(54) Packaging rope for plant roots.

(57) A packaging rope for plant roots is manufactured by immersing a hemp rope (4) in size (6) and then squeezing and drying the rope (4) so that the size (6) forms a solid agent.

Fig. 2

The present invention relates to a packaging rope to be used, for example, for tying the outer surface of straw mat or hemp cloth covering the root part of the plant when moving the plant.

Conventionally, as the material for such a rope, straw was mostly used.

Recently, however, as a result of the rice production control policy, straw production decreased and the price raised substantially, and it is no longer suited as the packaging rope material used for tying the outer surface of the straw mat or hemp cloth covering the root part of the plant when moving the plant.

To cope with this situation, instead of straw, hemp rope which is easily available at a relatively low price is mainly used.

When using a hemp rope as the packaging rope for tying the outer surface of the straw mat or hemp cloth covering the root part of the plant, since a hemp rope lacks consistency and is tough, it is easily caught between the blades of the clipping shears and is hard to cut off, and the packaging work is very difficult.

Furthermore, since a hemp rope is flexible and lacks consistency, it is difficult to wind a hemp rope around the outer surface of the straw mat or hemp cloth covering the root part of the plant, and at least two workers are needed in the packaging work, which results in a high cost in packaging.

The invention is devised in the light of the above problems, and is intended to provide a rope easily wound around the outer surface of the straw -mat or hemp cloth covering the root part of a plant, and easily cut off after packaging by shears.

According to the present invention, there is provided a packaging rope for plant roots manufactured by immersing a vegetable rope in a water-soluble and/or corrodable agent which can be solidified, and drying the rope while impregnated with the agent to solidify the agent and render the rope less flexible.

Since the hemp or other vegetable rope is immersed in an agent, and is then dried to solidify the agent, the rope has a secure consistency and is less flexible.

Next, for transplanting, the rope is wound around the outer surface of the root part of the plant covered with straw mat, and at this time since the rope is retained in shape in a relatively solid state by the solid agent, it is possible to wind it easily only by bending along the contour of the straw mat covering the root part.

The end of the rope covering the outer surface of the straw mat covering the root part is then cut off by shears, and in this case, since the rope is retained in a shape in a relatively solid state by the solid agent, it can be easily cut off as if cutting a soft bar.

When burying the root part of the plant again into the ground, it is put into the ground while the outer surface of the straw mat covering the root part is tied with the rope.

Then, the solid agent which causes the rope to retain its shape is dissolved or corroded by rain or water in the ground, and then the rope and straw mat corrode and disappear, so that the plant sets down its roots deep into the ground.

A packaging rope for a plant root according to the invention will now be described by way of example, with reference to the accompanying drawings, in which:

Fig. 1 is a perspective view of a plant to be transplanted in gardening; and

Fig. 2 is a magnified view of the packaging rope.

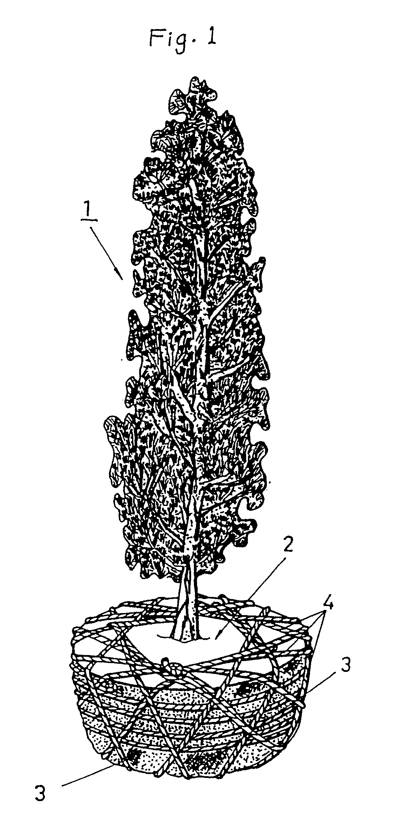

Fig. 1 is a perspective view of the plant to be transplanted in gardening, in which numeral 1 denotes the entire plant.

This plant 1 has its root part 2 excavated with soil with the circumference covered with a straw mat 3 so as not to damage the roots, and the outer circumference of this straw mat 3 is tied with a hemp rope (packaging rope) 4.

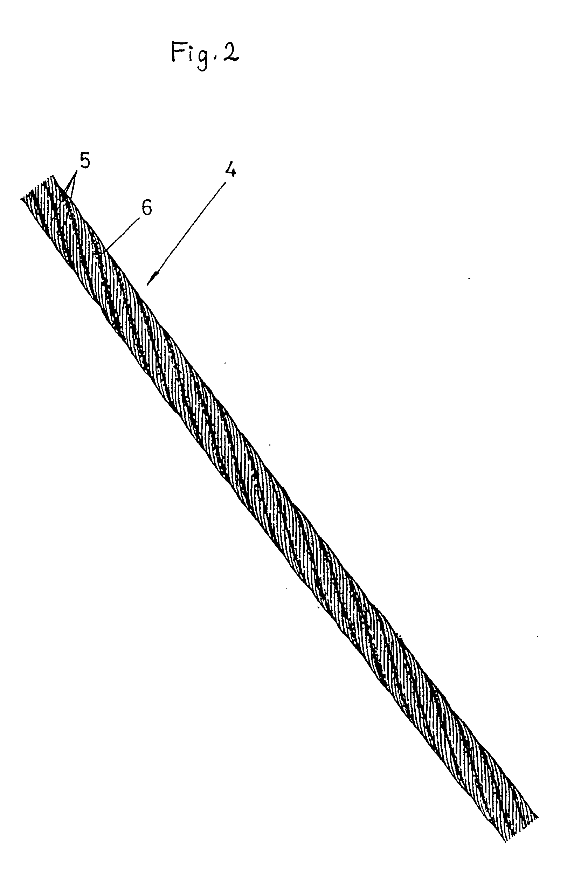

The hemp rope 4 for tying the outside of the straw mat 3 is made of jute 5, and is immersed in a liquid size (agent) mainly composed of starch, and after impregnating the jute 5 with this liquid size, it is lightly squeezed and dried, and when the size 6 contained in the jute 5 is dried, the hemp rope 4 is solidified to such an extent that it is bent lightly by its own weight (see Fig. 2).

When tying the outer surface of the straw mat 3 covering the root part 2 of the plant 1 with the thus formed hemp rope 4, since its shape is retained by the size 6, the hemp rope 4 can be wound in multiple plies only by bending along the outer circumference of the straw mat 3 covering the root part 2 of the plant 1.

The end of the hemp rope 4 wound on the outer circumference of the straw mat 3 is cut off by clipping shears, and, since the hemp rope 4 is retained in shape by the size 6, even a tough hemp rope 4 can be easily cut off as if cutting a soft bar.

When the root part 2 having the straw mat 3 tied thus with the hemp rope 4 is put back into a desired soil, first the hemp rope 4 and the size 6 retaining its shape are dissolved in rain or water in the soil, or corrode or are decomposed by bacteria in the soil, and then the straw mat 3 corrodes or is decomposed to disappear, so that the roots of the plant 1 will grow deep into the soil.

Meanwhile, the hemp rope 4 is used as the packaging rope material in this embodiment, but instead of hemp rope 4, other vegetable fibers such as hemp-palm and cotton fibers that dissolve, decompose or corrode in soil may be used.

As liquid size 6 for retaining the shape of the packaging rope, material mainly composed of starch is used in the embodiment, but PVA and other water-soluble synthetic resins may be similarly employed as a matter of course.

Apart from packaging of the roots, the rope of the invention may be also used as the supporting rope for avenue trees for about a year after planting.

## Claims

1. A packaging rope for plant roots manufactured by immersing a vegetable rope in a water-soluble and/or corrodable agent which can be solidified, and drying the rope while impregnated with the agent to solidify the agent and render the rope less flexible.

2. A packaging rope according to claim 1 characterised in that the agent is a size mainly of starch or of a water soluble synthetic resin.

3. A packaging rope according to claim 1 or claim 2 characterised in that the rope is of hemp, hemp-palm or cotton fibers.

Fig. 1

Fig. 2

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| | No further relevant documents have been disclosed.<br>----- | | D 07 B    1/02<br>A 01 G   23/04 |
| | | | **TECHNICAL FIELDS SEARCHED (Int. Cl.5)** |
| | | | D 07 B<br>A 01 G<br>A 01 C<br>B 27 K |

The present search report has been drawn up for all claims

| Place of search | Date of completion of the search | Examiner |
|---|---|---|
| THE HAGUE | 26-06-1991 | GOODALL C.J. |

EPO FORM 1503 03.82 (P0401)